# EUROPÄISCHE PATENTSCHRIFT

(11) **EP 3 398 420 B1**
(45) Veröffentlichungstag und Bekanntmachung des Hinweises auf die Patenterteilung: **09.09.2020**
(21) Anmeldenummer: 18169497.7
(22) Anmeldetag: 26.04.2018
(51) Int. Cl.: A01B 69/00, A01F 15/08, A01B 69/04, A01B 79/00, A01D 41/127, G05D 1/02

(54) **VERFAHREN UND ANORDNUNG ZUR KONTROLLE DER GESCHWINDIGKEIT EINER BALLENPRESSE**
METHOD AND ASSEMBLY FOR CONTROLLING THE SPEED A BALER
PROCÉDÉ ET DISPOSITIF DE CONTRÔLE DE LA VITESSE D'UNE PRESSE À BALLES

(30) Priorität: 02.05.2017 DE 102017207347
(43) Veröffentlichungstag der Anmeldung: 07.11.2018
(73) Patentinhaber: Deere & Company, Moline, IL 61265 (US)
(72) Erfinder: Gresch, Valentin, 68163 Mannheim (DE); Jung, Benedikt, 68163 Mannheim (DE)
(74) Vertreter: Holst, Sönke

(56) Entgegenhaltungen:
- CN-A- 104 709 279
- DE-A1-102005 029 405
- DE-B3-102014 204 603
- US-B1- 6 389 785

## Beschreibung

Die Erfindung betrifft ein Verfahren und eine Anordnung zur Kontrolle der Geschwindigkeit einer Ballenpresse.

### Stand der Technik

Quaderballenpressen werden zur Ernte von landwirtschaftlichem Erntegut wie Heu, Silage oder Stroh eingesetzt. Dabei wird die Quaderballenpresse von einem Traktor gezogen und über eine Zapfwelle mechanisch angetrieben. Das Erntegut wird üblicherweise in einer Vorpresskammer vorverdichtet und danach in der leicht konvergierenden Hauptpresskammer von einem reziprok arbeitenden Presskolben gegen den bereits existierenden Ballen verdichtet.

Um die Presse mit höchstmöglicher Produktivität betreiben zu können, muss eine Fahrgeschwindigkeit gewählt werden, die abhängig von der Schwadgröße und -dichte angepasst wird. Im Stand der Technik gibt es von verschiedenen Herstellern Regelsysteme, welche die Vorfahrtsgeschwindigkeit des Traktors basierend auf einem Sensorsignal der Quaderballenpresse regelt. Das Sensorsignal wird dabei von einem in die Pick-up, Vorpresskammer oder Hauptpresskammer integrierten Sensor generiert und stellt einen Kennwert für die Auslastung der Presse dar. Solche Sensoren sind im Stand der Technik vielzählig bekannt (vgl. US 6 546 705 B2). So werden beispielsweise das Drehmoment oder die Drehzahl an der Pick-up, Kräfte am Raffer oder Presskolben oder auch die Anzahl Kolbenhübe pro neuem Erntegutpacken sensiert. Der Nachteil dieser Regelsysteme ist, dass sie nur reaktiv arbeiten können und deshalb nicht oder nur verzögert auf größere Schwankungen im Schwad reagieren können. Insbesondere wenn Stroh gepresst wird, welches vorher durch einen Mähdrescher geschnitten und in den Schwad abgelegt wird, kann dies Probleme darstellen. Musste der Mähdrescher aus irgendwelchen Gründen anhalten, so sammelt sich an einer Stelle durch die verzögerte Strohablage eine große Menge Stroh an einer einzelnen Stelle. Der Fahrer muss in solchen Situationen aktiv eingreifen, das System unterbrechen und manuell über den Strohhaufen fahren. Ansonsten riskiert er, dass die Presse verstopft.

Um diese Problem zu lösen, wurde vorgeschlagen, mittels Sensorik den Schwad vor dem Traktor zu erfassen und zu charakterisieren. Dies kann beispielsweise mittels (Stereo-) Kamera (US 7 400 957 B2), Laserscanner (US 6 389 785 B1) oder Ultraschallsensoren erfolgen (L. Hofmann, Schwadabtastung mit Ultraschall, Landtechnik 5, 1993, Seiten 266-268).

Der kostenintensive sensorische Aufwand und Anfälligkeiten auf Umwelteinflüsse wie Staub und Schmutz haben bisher eine verbreitete kommerzielle Nutzung solcher vorausschauender Systeme verhindert. Ebenfalls nachteilig ist bei der im Stand der Technik bekannten sensorischen Erfassung des Schwades, dass nur geometrische Informationen zu dem Schwad wie beispielsweise Breite, Höhe oder Querschnittsfläche bzw. Volumen bestimmt werden können. Für eine optimale Durchsatzregelung der Ballenpresse ist jedoch die Schwaddichte und ggf. die -feuchtigkeit ebenfalls relevant.

Das Problem einer Geschwindigkeitsoptimierung liegt auch bei Rundballenpressen vor (s. DE 10 2005 029 405 A1).

Die EP 2 952 081 A1 beschreibt eine Vorgehensweise, bei der während der Ernte von Getreide mit einem Mähdrescher verschiedene Daten hinsichtlich des Strohs abgespeichert werden, z.B. die Lage des Strohschwads und die bei dessen Erzeugung vorliegende Fahrtrichtung des Mähdreschers, und diese Daten zur Planung des Wegs der Ballenpresse zum Aufnehmen des Strohschwads genutzt werden, damit die Ballenpresse in entgegen gesetzter Richtung zu der Richtung des Mähdreschers fahren kann. Weiterhin wurde vorgeschlagen, eine Ballenpresse anhand einer abgespeicherten Schwadposition zu lenken (US 2007/0175198 A1, DE 10 2005 047 306 A1, DE 10 2005 004 508 A1, EP 2 267 567 A2). Das erwähnte Problem der Geschwindigkeitsregelung wird durch diese Maßnahmen jedoch nicht gelöst.

### Aufgabe

Die Aufgabe wird folglich darin gesehen, ein kostengünstiges und robustes Durchsatzregelsystem für Ballenpressen zu entwickeln, welches mit großen Variationen im Schwad zurechtkommt.

### Lösung

Die vorliegende Erfindung wird durch die Patentansprüche definiert.

Es wird eine automatisierte Kartierung der Schwade bei deren Erstellung und eine Verarbeitung dieser Daten zur prädiktiven Durchsatzregelung für Ballenpressen vorgeschlagen. Im Ausführungsbeispiel wird die Vorgehensweise beim Einsatz in Getreidestroh d.h. bei der Ernte mit einem Mähdrescher und anschließendem Pressvorgang mit einer Quaderballenpresse beschrieben. Analog kann die Vorgehensweise aber auch auf andere Pressenarten, wie Rundballenpressen, angewendet werden. Auch kann sie bei der Maisernte verwendet werden.

In einem ersten Schritt werden Daten erzeugt, welche zur Charakterisierung der im Schwad abgelegten Erntegutreste (bei denen es sich in der Regel um Stroh handelt) weiterverarbeitet werden können. Dies geschieht mittels einer Sensierung und georeferenzierten Datenaufzeichnung auf dem Mähdrescher. Es werden das verarbeitete Erntegut sensiert, die Fahrzeugposition des Mähdreschers sowie dessen Orientierung mittels GNSS-Empfänger erfasst und die Position bzw. Trajektorie der Schwadablage in einem erdfesten Koordinatensystem berechnet und gemeinsam mit den sensierten Daten (und/oder aus den sensierten Daten abgeleiteten Daten, die beliebige Eigenschaften des Ernteguts oder Werte der anzusteuernden Geschwindigkeit der Ballenpresse betreffen können) in einer Speichereinrichtung aufgezeichnet. Im Falle einer Erfassung des Erntegutbestands vor dem Schneidwerk können die Position oder Trajektorie des Messerbalkens sowie und Informationen über die Schneidwerksbreite sowie Maschinendimensionen des Mähdreschers berücksichtigt werden, um die Position des Schwads und dessen Strohmenge zu bestimmen.

Zwischen dem Schnittvorgang bzw. Aufnahme des Strohs auf dem Tisch des Schneidwerks (bzw. der Sensierung des Ernteguts, die zur Kartierung der Strohmengen dient) und der Ablage des Schwads auf dem Feld vergeht eine gewisse Verzögerungszeit, die bei der Aufzeichnung der Position des Schwades berücksichtigt werden kann. Die erwähnte Verzögerungszeit hängt zudem von gewissen Maschineneinstellungen des Mähdreschers ab. Über eine Erfassung und Auswertung der relevanten Maschinenparameter des Mähdreschers lässt sich diese Verzögerungszeit ausreichend genau bestimmen. Folgende Parameter können dabei abhängig von dem eingesetzten Mähdreschertyp berücksichtigt werden:
Fördergeschwindigkeit (Schnecke oder Förderband) am Schneidwerk, Drehzahl des Schrägförderers, Rotordrehzahl des Dresch- und Abscheiderotors (bei einem Axialmähdrescher), Trommeldrehzahl des Dreschorgans (bei Schüttler- oder Hybridmähdrescher), Rotordrehzahl des Abscheideorgans (bei Hybridmähdrescher), Drehzahl des Schüttlerantriebs (bei Schüttlermähdrescher).

Um die Strohmenge im Schwad zu bestimmen, werden ebenfalls Sensorwerte und/oder Betriebsparameter des Mähdreschers herangezogen.

Auch können auf dem Mähdrescher allfällig installierte bildgebende (z.B. Stereokameras) oder andere den Arbeitsbereich bzw. Schwadablagebereich überwachende Sensoren dazu verwendet werden, um das Volumen und anderweitige geometrische Größen des Bestands bzw. des abgelegten Schwades zu erfassen.

Des Weiteren können Daten zu Kornertrag, Kornfeuchte und Strohfeuchte ebenfalls gespeichert und weiterverarbeitet werden. Beispielsweise kann mittels bekannter Schneidwerksbreite zusammen mit der Schneidwerks- und Haspelhöhe sowie der Fahrgeschwindigkeit und einer sensorisch erfassten Bestandsdichte und -höhe (s. beispielsweise DE 10 2008 043 716 A1) ein Volumenstrom errechnet werden, welcher in die Maschine gezogen wird. Mit Hilfe des aktuellen Ertrags des Ertragssensors und der Kenntnis des Korn-Stroh-Verhältnisses aus der Fruchtart kann weiterhin eine Strohmasse geschätzt werden.

Durch die direkte Feuchtigkeitsmessung des Strohs bzw. die indirekte Abschätzung der Strohfeuchte über Messung der Kornfeuchte lässt sich eine relative Feuchtigkeitsverteilung des Schwades erreichen. Der Schwad wird in der Regel bis zum Pressvorgang abtrocknen, womit die auf dem Mähdrescher ermittelten absoluten Feuchtigkeitswerte nicht mehr aktuell sind. Auf der Ballenpresse ist jedoch vorteilhafterweise ebenfalls ein Feuchtigkeitssensor verbaut (siehe unten) welcher Referenzwerte liefert, mittels welcher die Feuchte im Schwad kalibriert werden kann.

Insbesondere lassen sich somit Nester von feuchtem Stroh kartieren und die Durchsatzregelung der Quaderballenpresse prädiktiv darauf anpassen. Solche "feuchten Nester" sind heute eine wesentliche Schwierigkeit für den Fahrer der Quaderballenpresse, da sie oft zu spät erkannt werden und dann den Einzug oder die Vorpresskammer der Ballenpresse verstopfen. Dies führt zu Stillstandzeiten und somit zu Produktivitätsverlust.

Für die Strohernte mit der Ballenpresse ebenfalls relevant ist die Strohqualität. Unter dem Begriff Strohqualität ist neben Aspekten wie Strohfeuchte insbesondere die durchschnittliche Strohlänge bzw. die Längenverteilung der einzelnen Strohhalme zu verstehen. Die Strohqualität kann vorteilhaft mittels eines Kamerasystems bildverarbeitend ermittelt werden oder basierend auf Feuchtigkeit und Mähdreschertyp abgeschätzt werden. Wahlweise können auch Betriebsparameter des Mähdreschers, wie der aktuelle Dreschkorbabstand verglichen zum Empfehlungswert für die Fruchtart, sowie der Prozentsatz an Bruchkorn, welcher mittels einer Kornqualitätskamera ermittelt wird, zur Abschätzung der Strohqualität herangezogen werden. Es ist davon auszugehen, dass ein hoher Bruchkornanteil und/oder ein geringer Dreschkorbabstand zu einer schlechteren Strohqualität aus Gründen der höheren mechanischen Belastung des Strohs während des Dreschvorgangs führen.

Basierend auf einer sensorisch ermittelten oder aber modellbasiert berechneten Strohqualität lässt sich die Durchsatzregelung der Ballenpresse verfeinern. Auch können die Daten dem Fahrer der (Quader-) Ballenpresse angezeigt werden, um eine Entscheidung ob Schnittmesser eingesetzt werden sollen, zu erleichtern oder die Schnittmesser selbsttätig zu aktivieren oder zu deaktivieren.

Aus diesen obig genannten Informationen wird und eine Art Applikationskarte für die Ballenpresse erstellt. Anhand dieser wird die Durchsatzregelung der Ballenpresse prädiktiv vorgesteuert. Die Traktorgeschwindigkeit wird mittels an sich bekannter Geschwindigkeitssteuerung derart moduliert, dass ein maximaler Durchsatz erreicht wird.

Die Erstellung dieser Applikationskarte kann auf einem Steuergerät des Mähdreschers, einem beabstandeten Rechensystem, auf einem Tablet-Computer oder auch einem Steuergerät des Traktors bzw. der Ballenpresse erfolgen.

Neben der Schwadposition können unter anderem folgende für die prädiktive Durchsatzregelung relevanten Kenngrößen georeferenziert berechnet und an die Ballenpresse übertragen werden: Art des Ernteguts (z.B. Weizenstroh, Gerstenstroh,...), relative Schwadmasse, Strohlänge, Feuchtigkeit des Schwades, geometrische Schwadinformation (Breite, Höhe, Querschnitt), Indikation von "feuchten Nestern", Indikation einer Schwadanhäufung (z.B. weil der Mähdrescher anhalten musste).

Einige oder alle der vorstehend erwähnten Daten werden an die Ballenpresse bzw. ein sie ziehendes Fahrzeug übertragen, ausgewertet und zur Durchsatzregelung angewendet. Hierbei wird die Position der Ballenpresse bestimmt und mit der Applikationskarte verglichen. Die ermittelten relativen Kennwerte (relative Schwadmasse, Feuchtigkeit des Schwades zum Schnittzeitpunkt) werden mit aktuellen, sensorisch erfassten Kenngrößen abgeglichen und kalibriert.

Bei eine Vorpresskammer einer Quaderballenpresse mit Sensorik zur Bestimmung des Massedurchsatzes kann die Kraft an Raffer und Vorkammerunterboden gemessen und daraus der Massedurchsatz berechnet werden (vgl. EP 3 001 894 A1).

Anhand der aktuellen Massedurchsatzdaten und prädiktierten Strohmengen wird eine Fahrgeschwindigkeit berechnet und in an sich bekannter Weise (beispielsweise über ISOBUS class 3, Tractor Implement Automation) an den Traktor kommandiert. Insbesondere bei "feuchten Nestern" oder großen Strohanhäufungen wird das Regelsystem nun anders als bei bisher bekannten System sehr stark verzögern, so dass die Erntegutmenge ohne zusätzlichen Bedienereingriff sauber aufgenommen und gepresst werden kann.

Das Regelsystem kann wie im Stand der Technik an sich bekannt in verschiedenen Betriebsmodi gefahren werden, die auf Optimierung des Durchsatzes, der Ballenqualität oder einer Mischregelung ausgelegt sind.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung heranzuziehen sind. Es zeigt:
- Fig. 1: eine schematische seitliche Ansicht eines Mähdreschers,
- Fig. 2: eine seitliche Ansicht eines Ackerschleppers mit einer angehängten Rechteckballenpresse,
- Fig. 3: ein Schema des Antriebssystems des Ackerschleppers, und
- Fig. 4: ein Flussdiagramm, nach dem die Steuerung des Antriebssystems arbeitet.

### Mähdrescher

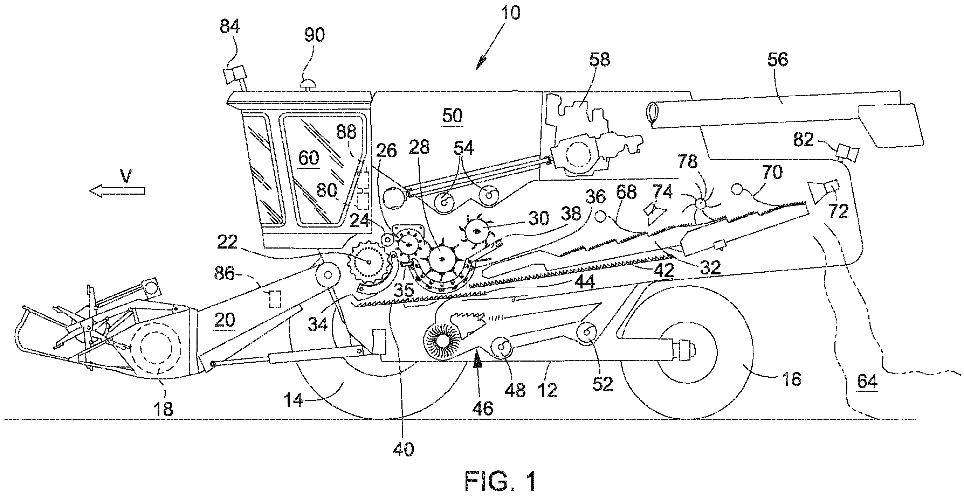

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

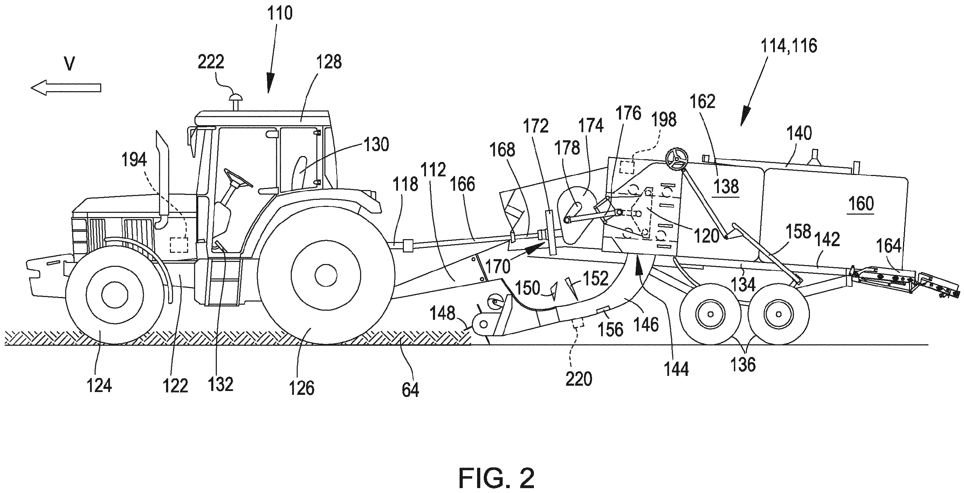

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchte von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32, der sich aus mehreren (z. B. 5 oder 6) einzelnen Schüttlern zusammensetzt, die phasenverschoben über eine Kurbelwelle 102 (s. Figur 2) in eine Schwingbewegung versetzt werden, um Korn aus dem Stroh auszulösen und das Stroh als Schwad 64 an der Rückseite des Mähdreschers 10 auf dem Feld abzugeben, insofern es nicht durch einen nicht gezeigten Strohhäcksler gehäckselt und über die Breite des Schneidwerks 18 auf dem Feld verteilt wird. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Unterhalb des Mehrtrommeldreschwerks befindet sich ein vorderer Förderboden 40, der im Betrieb eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Korn, Kurzstroh und Spreu nach hinten, während der hintere Förderboden 42 das durch den Strohschüttler 32 hindurch strömende Gemisch aus Korn, Kurzstroh und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann in eine Reinigungseinrichtung 46. Der hintere Förderboden 42 könnte sein Gemisch auch direkt an die Reinigungseinrichtung 46 abgeben.

Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Es bleibt anzumerken, dass das hier dargestellte Mehrtrommeldreschwerk mit nachgeordnetem Strohschüttler 32 nur ein mögliches Ausführungsbeispiel ist. Es könnte auch durch eine einzige quer angeordnete Dreschtrommel und eine nachgeordnete Trenneinrichtung mit einem Strohschüttler oder eine einzige oder mehrere quer angeordnete Dreschtrommel(n) und eine nachgeordnete Trenneinrichtung mit einem oder mehreren Trennrotoren oder durch einen oder mehrere Axialdresch- und Trennrotoren ersetzt werden.

Der Mähdrescher 10 ist mit einer Steuereinrichtung 80 ausgestattet, die mit einer Speichereinrichtung 88 und einer Positionsbestimmungseinrichtung 90 verbunden ist. Die Positionsbestimmungseinrichtung 90 empfängt Signale von einem satellitenbasierten Positionsbestimmungssystem (GPS, Galileo, Glonass o.ä.) und ggf. Korrektursignale und berechnet die aktuelle Position des Mähdreschers 10. Anhand von Sensoren, die im Folgenden beschrieben werden, wird in der Speichereinrichtung 88 während des Erntebetriebes eine Karte abgespeichert, in welcher die Positionen, an denen der Mähdrescher 10 an seiner Rückseite das Schwad 64 ablegt, welches aus ausgestoßenen Erntegutreste (Stroh) besteht, und die zugehörigen Strohmengen eingetragen sind.

Ein erster Sensor 68 ist ein mechanischer Fühler zur Erfassung der Dicke der Erntegutmatte oberhalb des Strohschüttlers 32. Er ist etwa in der Mitte des Strohschüttlers 32 angeordnet und um eine horizontal und quer zur Fahrtrichtung verlaufende Achse drehbar oberhalb des Strohschüttlers 32 aufgehängt und durch Federkraft und die Schwerkraft nach unten vorgespannt. Ein Potentiometer oder eine optische Kodierscheibe dient zur Erfassung der Winkelstellung des ersten Sensors 68. Oberhalb des Strohschüttlers 32 vorhandenes Erntegut dreht den Sensor 68 um die Achse nach oben. Eine Information über den Drehwinkel wird der Steuereinrichtung 80 zugeführt.

Stromab des ersten Sensors 68 ist oberhalb des Endbereichs des Strohschüttlers 32 ein zweiter Sensor 70 angeordnet, der mit dem ersten Sensor 68 baugleich ist. Der Drehwinkel des Sensors 70 wird ebenfalls erfasst und eine entsprechende Information wird der Steuereinrichtung 80 zugeführt.

Ein dritter Sensor 72 in Form einer Kamera ist rückwärtig des Endbereichs des Strohschüttlers 32 angeordnet. Der Sensor 72 erfasst ein Bild des Ernteguts auf dem Strohschüttler 32 und des am Ende des Strohschüttlers 32 herunterfallenden Ernteguts. Der dritte Sensor 72 ist mit einem Bildverarbeitungssystem verbunden, das innerhalb der Steuereinrichtung 80 realisiert oder zwischen den Sensor 72 und die Steuereinrichtung 80 eingeschleift sein kann. Das Bildverarbeitungssystem ist eingerichtet, mindestens eine der folgenden Informationen aus dem Videosignal der Kamera zu extrahieren und der Steuereinrichtung 80 zuzuführen: Dicke der Erntegutmatte auf dem Strohschüttler 32 sowie die Geschwindigkeit, mit der sich die Erntegutmatte auf dem Strohschüttler 32 nach hinten bewegt (diese Geschwindigkeit kann durch Identifizieren von Punkten in der Erntegutmatte, z. B. einzelne markante Strohhalme, und Erfassen ihrer Bewegung evaluiert werden).

Ein vierter Sensor 74 ist etwa oberhalb der Mitte des Strohschüttlers 32 angeordnet und blickt von oben her auf die Erntegutmatte. Der vierte Sensor 74 ist ein Radarsensor mit einem Sender für relativ kurzwellige elektromagnetische Wellen und einem Empfänger zur Erfassung reflektierter Wellen. Der vierte Sensor 74 leitet aus der Laufzeit, Intensität und Frequenzverschiebung (Dopplereffekt) der mit dem Empfänger empfangenen, von der Erntegutmatte reflektierten Wellen des Senders mindestens eine der folgenden Größen ab und führt sie der Steuereinrichtung 80 zu: Dicke der Erntegutmatte und ihre Bewegungsgeschwindigkeit auf dem Strohschüttler 32 nach hinten. Um die Dicke und Geschwindigkeit der Erntegutmatte auf dem Strohschüttler 32 möglichst fehlerarm bestimmen zu können, wird dem vierten Sensor 74 vorzugsweise eine Information über die jeweilige Stellung und/oder Bewegungsrichtung des Strohschüttlers 32 zugeführt, die mit einem Winkelsensor 80 an der Welle des Strohschüttlers 32 ermittelt wird. Der vierte Sensor 74 kann mittels der Werte des Winkelsensors 80 die Position und Geschwindigkeit des Strohschüttlers 32 bestimmen und von den anhand des Senders und Empfängers gemessenen Werten abziehen.

Ein fünfter Sensor 78 setzt sich aus einer horizontal und quer zur Vorwärtsrichtung V angeordneten Welle mit radial nach außen abstehenden Zinken und einem Drehgeschwindigkeitssensor zusammen und ist oberhalb des Strohschüttlers 32 angeordnet. Die Zinken sind vorzugsweise nachlaufend gekrümmt und greifen in die Erntegutmatte ein. Die mittlere Drehgeschwindigkeit des Sensors 78 ist demnach mit der Fördergeschwindigkeit des Ernteguts auf dem Strohschüttler 32 korreliert.

Ein sechster Sensor 86 erfasst den Durchsatz des Ernteguts durch den Schrägförderer 20. Hierzu sei auf die Offenbarung der EP 1 266 558 A2 verwiesen. Ein siebter Sensor 84 ist als Stereo- oder Mono-Kamera mit Bildverarbeitungssystem oder abtastender Radar- und/oder Lasersensor ausgeführt und erfasst den stehenden Erntegutbestand vor dem Schneidwerk 18. Ein achter Sensor 82 ist als Stereo- oder Mono-Kamera mit Bildverarbeitungssystem oder abtastender Radar- und/oder Lasersensor ausgeführt und erfasst das Schwad 64 rückwärtig des Mähdreschers 10.

Bei möglichen Ausführungsformen können nur einer oder mehrere der gezeigten Sensoren 68, 70, 72, 74, 78, 86, 84, 82 vorhanden sein.

Es wäre (zusätzlich oder alternativ zu den erwähnten Sensoren) auch denkbar, die Strohmengen anhand von Maschinenparameter des Mähdreschers zu ermitteln. Relevante Betriebsparameter sind insbesondere die für Förderorgane, z.B. Dresch- und Abscheideorgane und/oder Schrägförderer verwendete Motorleistung, beziehungsweise die gesamt verwendete Motorleistung ohne Aufschlüsselung in die Einzelkomponenten, das Drehmoment bzw. der Rotordruck des Dresch- und Abscheiderotors (bei einem Axialmähdrescher), das Drehmoment des Dreschorgans 22 (bei einem Schüttler- oder Hybridmähdrescher), das Drehmoment des Abscheideorgans 28 (bei einem Mehrtrommel- oder Hybridmähdrescher), das Drehmoment des Antriebs des Schüttlers 32 (bei Schüttlermähdrescher), das Signal von einem Kornertrags- und Kornfeuchtesensor, die Fahrgeschwindigkeit, die Schneidwerks- und Haspelhöhe und die Fruchtart zur Ermittlung des Korn- Stroh- Verhältnisses. Aus dem sensorisch oder antriebsleistungsabhängig erfassten Kornertrag kann demnach auf die Strohmenge zurückgeschlossen werden, insbesondere unter Verwendung einer oder mehrerer der erwähnten Daten.

Anhand der Signale der Positionsbestimmungseinrichtung 90 und eines oder mehrerer der Sensoren 68, 70, 72, 74, 78, 86, 84 und/oder 82 erfasst die Steuerung 80 während des Erntebetriebs Daten hinsichtlich der Position des Schwads 64 und der zugehörigen Strohmengen. Da die Sensoren 68, 70, 72, 74, 78, 86, 84 und/oder 82 an Stellen mit dem Erntegut zusammenwirken, die gegenüber der endgültigen Ablageposition des Schwads 64 versetzt angeordnet sind, und auch gegenüber der Positionsbestimmungseinrichtung 90 versetzt sind, erfolgt hierbei jeweils eine Umrechnung der mittels der Positionsbestimmungseinrichtung 90 erfassten Position in die Position des Sensors 68, 70, 72, 74, 78, 86, 84 und/oder 82 und eine Umrechnung Position des Sensors 68, 70, 72, 74, 78, 86, 84 und/oder 82 in jene Position, an der das mit dem Sensor 68, 70, 72, 74, 78, 86, 84 und/oder 82 zusammenwirkende Erntegut bzw. Stroh tatsächlich im Schwad 64 abgelegt wird. Hierbei kann auf die bekannten Fördergeschwindigkeiten des Ernteguts im Mähdrescher 10 zurückgegriffen werden, die z.B. mittels eines oder mehreren der Sensoren 78 und 72 für die Fördergeschwindigkeit des Strohschüttlers 32 ermittelt werden können. Analog können die der Steuereinrichtung 80 durch geeignete Sensoren oder Sollwerte bekannten Drehzahlen der Antriebe der Querförderschnecke des Schneidwerks 18, des Schrägförderers 20 und des Dreschwerks 22, 26, 28 berücksichtigt werden. Die Abmessungen der erwähnten Fördereinrichtungen sind der Steuereinrichtung 80 ebenfalls bekannt und im Speicher 88 abgelegt.

Demnach ist nach Ende eines Erntevorgangs in der Speichereinrichtung 88 eine Karte des Feldes abgelegt, in welcher die Positionen des Schwads 64 und die Strohmengen ortsspezifisch und georeferenziert abgelegt sind.

### Ackerschlepper und Ballenpresse

Die Figur 2 zeigt ein landwirtschaftliches Arbeitsfahrzeug in Form eines Ackerschleppers 110, der über eine Deichsel 112 eine Ballenpresse 114 in Form einer Rechteckballenpresse 116 zieht. Eine Zapfwelle 118 dient zum Antrieb beweglicher Elemente der Ballenpresse 114 und insbesondere eines Stopfers 120. Der Ackerschlepper 110 baut sich auf einem Fahrgestell 122 auf, das sich auf lenkbaren Vorderrädern 124 und antreibbaren Hinterrädern 126 abstützt und eine Kabine 128 trägt, in der sich ein Bedienerarbeitsplatz 130 befindet. Mittels einer Eingabeeinrichtung 132 in Form eines Pedals oder eines Fahrhebels, der ohne dauerhafte Bedienerinteraktion eine Sollgeschwindigkeit vorgeben kann, kann in einer manuellen Betriebsart die Vortriebsgeschwindigkeit des Ackerschleppers 110 durch einen Bediener vorgegeben werden.

Die Rechteckballenpresse 116 dient zum Herstellen quaderförmiger Ballen. Die Rechteckballenpresse 116 weist einen Rahmen 134 auf, der auf Bodenstützrädern 136 in Tandemanordnung abgestützt ist. An den Rahmen 134 ist die Deichsel 112 angeschlossen, welche sich von diesem aus nach vorn erstreckt und so ausgebildet ist, dass sie an den Ackerschlepper 110 angeschlossen werden kann, der mit der Zapfwelle 118 ausgerüstet ist, um Leistung zum Antreiben verschiedener angetriebener Komponenten der Rechteckballenpresse 116 bereitzustellen. Ein Pressraum 138 in Form einer Kammer von rechteckförmigem Querschnitt wird teilweise von einem Gehäuseoberteil 140 und einem Gehäuseunterteil 142 gebildet, wobei der Gehäuseunterteil 140 mit einem Guteinlass 144 versehen ist, an den ein gekrümmter Zufuhrkanal 146 angeschlossen ist. Die Seitenwände des Pressraums 138 und/oder das Gehäuseoberteil 140 können starr angebracht oder durch nicht gezeigte Aktoren verstellbar sein, so dass der Querschnitt des Pressraums 138 veränderbar ist. Über die Einstellung der Aktoren lässt sich der seitliche Anpressdruck auf den Ballenteil 162 und somit die Pressdichte variieren.

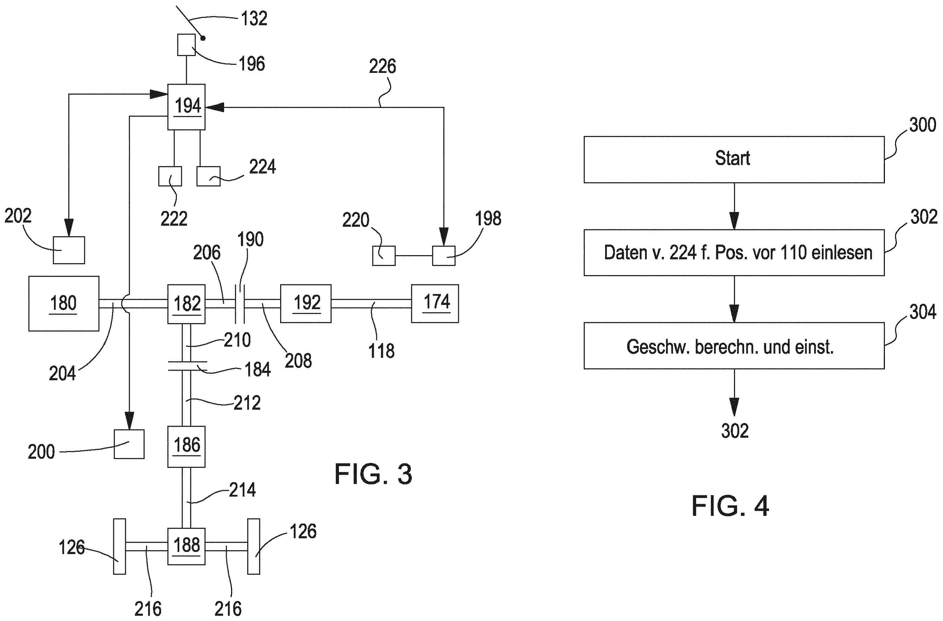

Eine Zufuhreinrichtung weist eine Erntegutaufnahmevorrichtung 148 in Form eines Aufnehmers mit einem zugeordneten Niederhalter, eine Verdichtergabel 150 und eine Ladegabel 152 auf. Die Erntegutaufnahmevorrichtung 148 umfasst eine zur Mitte fördernden Schnecke und ist vor dem Zufuhrkanal 146 angeordnet, um das (vom Mähdrescher 10 der Figur 1 erzeugte) Schwad 64 von Erntegut vom Boden aufzuheben und es an die Verdichtergabel 150 abzugeben, die dazu dient, Erntegut in dem Zufuhrkanal 146 zu verdichten, bis sich eine Ladung von vorgewählter Dichte in dem Zufuhrkanal 146 angesammelt hat und mittels der Ladegabel 152 über den Guteinlass 144 in den Pressraum 138 hineingestopft wird. An einer vorderen unteren Stelle des Zufuhrkanals 146 ist eine federbelastete Klappe 156 schwenkbar montiert, die in Abhängigkeit der Dichte des in dem Zufuhrkanal 146 befindlichen Erntegutes schwenkt und anzeigt, sobald eine gewünschte Pressgutdichte in dem Zufuhrkanal 146 erreicht ist, um über eine Kontrolleinheit 198 der Ballenpresse 114 (vgl. Figur 3) die Bestromung eines elektrischen Steuerkreislaufs zu bewirken, der eine entsprechende Antriebsverbindung herstellt, die die Ladegabel 152 aktiviert, so dass sie die Ladung des Ernteguts in den Pressraum 138 bewegt. Im Folgenden beziehen sich Richtungsangaben, wie vorn, hinten stets auf die Vorwärtsrichtung V des Ackerschleppers 110 und der Rechteckballenpresse 116, die in der Figur 2 von rechts nach links verläuft.

Wenn die Ladung des Ernteguts in den Pressraum 138 eingebracht wurde, wird der Stopfer 120 mittels eines geeigneten Antriebs in einer gesteuerten Reihenfolge zeitlich nach der Ladegabel 152 betätigt, um das Erntegut nach hinten in den Pressraum 138 zu bewegen, wo es in einem Stapel verdichtet wird. Nachdem der Stapel von verdichtetem Material eine vorgewählte Länge erreicht hat, wird ein Nadelzusammenbau 158 zum Liefern von Bindegarn, der mehrere gekrümmte Nadeln enthält, betätigt, um mehrere Garnstränge einer entsprechenden Anzahl nicht gezeigter Knoter zuzuführen, die so wirken, dass sie Garnlängen um die vorgewählte Länge der Stapel legen, um einen Ballen 160 zu bilden, der zum Entladen fertig ist, was dann geschieht, wenn er von einem noch nicht fertigen Ballenteil 162 aus dem rückwärtigen Endbereich des Pressraums 138 herausgedrückt wird, wenn er in seiner Länge zunimmt, weil neue Ladungen von Erntegut in den Pressraum 138 gestopft werden.

Der Stopfer 120 ist für eine hin- und hergehende Bewegung in dem Pressraum 138 zwischen einer zurückgezogenen Stellung vor dem Guteinlass 144 und einer (in Figur 2 gezeigten) teilwiese ausgefahrenen Stellung über dem Guteinlass 144 ausgelegt, aus der er sich noch weiter nach hinten bewegen kann, bis er gegen einen Ballenteil 162 stößt. Diese Bewegung des Stopfers 120 hat zum Ergebnis, dass Ladungen von Erntegut, die aus dem Zufuhrkanal 146 in den Pressraum 138 eingeführt werden, gegen einen Stapel von Erntegut verdichtet werden, was den teilweise gebildeten Ballenteil 162 und/oder den kompletten Ballen 160 einschließt. Zum schonenden Ablegen des Ballens 160 auf dem Erdboden ist am hinteren Ende des Rahmens 134 als rückwärtige Verlängerung des Gehäuseunterteils 142 eine Ablagevorrichtung 164 angebracht.

Der Antrieb des Stopfers 120 erfolgt über die Zapfwelle 118 des Ackerschleppers 110, die über eine Gelenkwelle 166 eine Eingangswelle 168 der Antriebseinrichtung 170 des Stopfers 120 antreibt. Die Eingangswelle 168 treibt ein Schwungrad 172 und über ein Getriebe 174 eine Kurbel 178 an, deren Bewegung über eine Pleuelstange 176 auf den Stopfer 120 übertragen wird.

Die Figur 3 zeigt ein Schema des Antriebssystems des Ackerschleppers 110 und der Ballenpresse 114. Ein Antriebsmotor 180 des Ackerschleppers 110, der als Verbrennungs-(Diesel-) Motor oder als Elektromotor ausgeführt sein kann, treibt mit seiner Ausgangswelle 204 ein Verteilergetriebe 182 an, das eine erste Vortriebsausgangswelle 210 und eine Lastausgangswelle 206 hat. Bei einer der Wellen 210 oder 206 kann das Verteilergetriebe 182 eine direkte Verbindung zur Ausgangswelle 204 beinhalten. Die Vortriebsausgangswelle 210 treibt über eine Fahrkupplung 184 eine Getriebeeingangswelle 212 an, die ein (z.B. als Lastschaltgetriebe oder stufenlos verstellbares Getriebe ausgeführtes) Vortriebsgetriebe 186 mit veränderbarer Übersetzung antreibt, das ausgangsseitig über eine Welle 214, ein Differentialgetriebe 188 und Radantriebswellen 216 die hinteren Räder 126 antreibt. Optional kann das Vortriebsgetriebe 186 auch die Vorderräder 124 über nicht gezeigte Antriebsmittel antreiben. Die Lastausgangswelle 206 steht über eine Zapfwellenkupplung 190 und ein Zapfwellengetriebe 192 mit der Zapfwelle 118 in Antriebsverbindung, die zum Antrieb der des Getriebes 174 der Antriebseinrichtung 170 und weiterer angetriebener Elemente der Ballenpresse 114 dient.

Das Verteilergetriebe 182, die Vortriebsausgangswelle 210, die Kupplung 184, das Vortriebsgetriebe 186, die Welle 214, das Differentialgetriebe 188 und die Radantriebswellen 216 bilden einen vom Antriebsmotor 180 antreibbaren Vortriebs-Antriebsstrang zum Antrieb von Vortriebsmitteln (Räder 126) des Ackerschleppers 110, der eine mittels des Aktors 1200 veränderbare Übersetzung aufweist. Das Verteilergetriebe 182, die Lastausgangswelle 206, die Kupplung 190, das Zapfwellengetriebe 192, die Zapfwelle 118 und das Getriebe 174 (mit den nachfolgenden Komponenten zum Antrieb des Stopfers 120) bilden einen vom Antriebsmotor 180 antreibbaren Last-Antriebsstrang zum Antrieb der Ballenpresse 114.

Eine elektronische Steuerung 194 ist mit einer Kontrolleinheit 198 der Ballenpresse 114, einem Aktor 200 zur Verstellung des Übersetzungsverhältnisses des Vortriebsgetriebes 186, einer Motorsteuerung 202, einem Geschwindigkeitsvorgabesensor 196 zur Erfassung der Stellung der Eingabeeinrichtung 132 und aus Gründen der Übersichtlichkeit nicht eingezeichneten Aktoren zum Schließen und Öffnen der Kupplungen 184 und 190 verbunden, obwohl letztere auch durch den Bediener per Hand oder Fuß betätigt werden könnten.

Die Steuerung 198 der Ballenpresse ist über ein Bussystem 226 mit der Steuerung 194 des Ackerschleppers 110 verbunden. Die Steuerung 194 ist mit einem Speicher 224 und einer Positionsbestimmungseinrichtung 222 verbunden, die gleichartig mit der Positionsbestimmungseinrichtung 90 des Mähdreschers 10 der Figur 1 sein kann. Im Speicher 224 ist für ein Feld, auf dem der vom Mähdrescher 10 erzeugte Schwad 64 liegt, eine Karte abgespeichert, die aus der Speichereinrichtung 88 des Mähdreschers 10 der Figur 1 stammt. Die Übertragung der Karte kann physisch mittels einer Speicherkarte erfolgen, die vom Mähdrescher 10 zum Ackerschlepper 110 getragen wird oder drahtlos, z.B. über eine Mobilfunk- oder WLAN-Verbindung. Die Karte kann vordem Einspeichern in den Speicher 224 noch aufbereitet werden, z.B. auf einem Hofcomputer oder bei einem Dienstleister, um beispielsweise unter Berücksichtigung von Wettereinflüssen (Temperatur, Sonneneinstrahlung, Lage des Schwads auf dem Feld etc.) einzubeziehen, in welcher Weise das Stroh seit der Ernte getrocknet ist.

### Arbeitsweise beim Ballenpressen

Die beim Ballenpressen verwendete Vorgehensweise der Steuerung 194 ist in der Figur 4 dargestellt. Nach dem Start im Schritt 300 wird im Schritt 302 anhand der mittels der Positionsbestimmungseinrichtung 222 ermittelten Position des Ackerschleppers 110 aus der Speichereinrichtung 224 ausgelesen, welche Menge an Stroh im Schwad 64 vor dem Ackerschlepper 110 liegt. Im Schritt 304 wird anhand der so bestimmten Strohmenge eine Geschwindigkeit des Ackerschleppers 110 bestimmt, die einem gewünschten Durchsatz an Stroh am Aufnehmer 148 der Ballenpresse 114 entspricht. Die Aktoren 200 und/oder 202 werden entsprechend eingestellt. Auf diese Weise erreicht man vorausschauend eine zur Aufnahme der jeweiligen Strohmenge geeignete Geschwindigkeit der Ballenpresse 114.

In einer Verfeinerung kann die Ballenpresse 114 mit einem Feuchtigkeitssensor 220 zur Erfassung der Strohfeuchte des Schwads 64 ausgestattet sein, dessen Messwerte durch die Kontrolleinrichtung 198 über den Bus 226 an die Steuerung 194 übergeben werden und von dieser zur Beeinflussung der Geschwindigkeit des Ackerschleppers 110 und somit der Ballenpresse 114 berücksichtigt werden. Hierbei kann auf in der Karte eingetragene, beim Erntevorgang mittels des Mähdreschers 10 gewonnene Feuchtigkeitswerte zurückgegriffen werden, wobei der Sensor 220 Referenzwerte liefert, mittels derer die kartierte Feuchte im Schwad kalibriert werden kann.

Analog kann die Ballenpresse 114 z.B. in ihrer Vorpresskammer 146 mit einer Sensorik zur Bestimmung des Massedurchsatzes ausgestattet werden, welche die Kraft am Raffer 150, 152 und/oder Vorkammerunterboden (Sensor 156) erfasst und daraus der Massedurchsatz berechnet (vgl. EP 3 001 894 A1). Anhand der aktuellen Massedurchsatzdaten, die über die Kontrolleinrichtung 198 an die Steuerung 194 weitergegeben können, kann die Steuerung 194 unter Berücksichtigung der abgespeicherten (prädiktierten) Strohmengen eine Fahrgeschwindigkeit berechnen und in an sich bekannter Weise kommandieren. Insbesondere bei "feuchten Nestern" oder großen Strohanhäufungen wird das Regelsystem nun anders als bei bisher bekannten System sehr stark verzögern, so dass die Erntegutmenge ohne zusätzlichen Bedienereingriff sauber aufgenommen und gepresst werden kann.

Es sei noch angemerkt, dass die bezüglich der Figuren 2 bis 4 gezeigten Aufgaben der Steuereinheit 194 des Ackerschleppers 110 alternativ auch durch die Kontrolleinrichtung 198 der Ballenpresse 114 übernommen werden können. Bei dieser Ausführungsform würde die Kontrolleinrichtung 198 die gewünschte Geschwindigkeit der Ballenpresse 114 berechnen und über den Bus 226 an die Steuereinheit 194 weiterleiten, welche ihrerseits die Geschwindigkeit des Ackerschleppers 110 kommandiert. Die Positionsbestimmungseinrichtung 222 könnte sich dann direkt an Bord der Ballenpresse 114 befinden und direkt mit der Kontrolleinrichtung 198 verbunden sein oder an Bord des Ackerschleppers 110 verbleiben und ihre Daten über den Bus 226 oder eine andere Verbindung an die Kontrolleinheit 198 übersenden.

## Patentansprüche

1. Verfahren zur Kontrolle der Geschwindigkeit einer Ballenpresse (114), mit folgenden Schritten:
Erfassen und Kartieren von wenigstens einer Ernteguteigenschaft und/oder davon abgeleiteter Daten während der Ernte von einem Feld mittels eines Mähdreschers (10), bei welcher Erntegutreste in einem Schwad (64) abgelegt werden,
und Kontrollieren der Geschwindigkeit der Ballenpresse (114) bei der Aufnahme des Schwads (64) unter Berücksichtigung der kartierten Ernteguteigenschaft und/oder der davon abgeleiteten Daten.

2. Verfahren nach Anspruch 1, wobei die kartierten Ernteguteigenschaft die geometrischen Abmessungen und/oder Masse der im Schwad abgelegten Erntegutreste und/oder deren Feuchtigkeit und/oder die durchschnittliche Strohlänge und/oder die Längenverteilung der einzelnen Strohhalme und/oder die Art des Ernteguts und/oder eine Indikation von feuchten Nestern und/oder die Indikation einer Schwadanhäufung und/oder den Kornertrag und/oder die Kornfeuchte und/oder die Geschwindigkeit der Ballenpresse (114) betrifft.

3. Verfahren nach Anspruch 1 oder 2, wobei beim Kartieren eine Verzögerungszeit zwischen einer Sensierung der Ernteguteigenschaft und einer Ablage der Erntegutreste auf dem Feld und/oder ein Versatz zwischen einer Positionsbestimmungseinrichtung (90) und dem Ort der Sensierung der Ernteguteigenschaft berücksichtigt werden/wird.

4. Verfahren nach Anspruch 3, wobei die Verzögerungszeit anhand von Fördergeschwindigkeit eines Schneidwerks (18), einer Drehzahl eines Schrägförderers (20), einer Rotordrehzahl eines Dresch- und/oder Abscheiderotors (22, 28) und/oder einer Drehzahl eines Antriebs eines Strohschüttlers (32) bestimmt wird.

5. Verfahren nach einem der vorhergehenden Ansprüche, wobei die Ernteguteigenschaft mittels eines Sensors (68, 70, 72, 74, 78, 86, 84 und/oder 82) und/oder anhand eines Betriebsparameters des Mähdreschers (10) bestimmt wird.

6. Verfahren nach Anspruch 5, wobei der Betriebsparameter des Mähdreschers (10) die Antriebsleistung eines Förderorgans für Erntegut ist.

7. Verfahren nach Anspruch 5 oder 6, wobei der Sensor (68, 70, 72, 74, 78, 86, 84 und/oder 82) ein mit dem Erntegut stromauf des Mähdreschers (10) oder im Mähdrescher (10) oder stromab des Mähdreschers (10) zusammenwirkender optischer Sensor (72, 74, 82, 84) ist.

8. Verfahren nach einem der vorhergehenden Ansprüche, wobei die Ballenpresse (114) mit mindestens einem Sensor zur Erfassung der Ernteguteigenschaft ausgestattet ist und die Geschwindigkeit der Ballenpresse anhand der Signale der Mittel kalibriert wird.

9. Verfahren nach einem der vorhergehenden Ansprüche, wobei die Berechnung von Geschwindigkeitssollwerten durch eine Steuereinrichtung des Mähdreschers (10) oder eine Kontrolleinheit (198) der Ballenpresse (114) oder eine Steuerung (194) eines sie ziehenden Arbeitsfahrzeugs oder einen separaten Rechner erfolgt.

10. Anordnung zur Kontrolle der Geschwindigkeit einer Ballenpresse (114), umfassend eine Steuerung (194) eines die Ballenpresse (114) ziehenden Zugfahrzeugs und/oder eine Kontrolleinheit (198) der Ballenpresse (114), die zum Kontrollieren der Geschwindigkeit der Ballenpresse (114) bei der Aufnahme des Schwads (64) unter Berücksichtigung wenigstens einer während der Ernte von einem Feld mittels des Mähdreschers (10), bei welcher Erntegutreste in einem Schwad (64) abgelegt werden, kartierten Ernteguteigenschaft und/oder daraus abgeleiteter Daten eingerichtet ist.

## Claims

1. Method for controlling the speed of a baler (114), comprising the following steps:
sensing and mapping at least one property of harvested material and/or data derived therefrom during the harvesting of a field by means of a combine harvester (10), during which residues of harvested material are deposited in a swathe (64),
and controlling the speed of the baler (114) as the swathe (64) is picked up, while taking into account the mapped property of the harvested material and/or the data derived therefrom.

2. Method according to Claim 1, wherein the mapped property of the harvested material relates to the geometric dimensions and/or mass of the residues of harvested material deposited in the swathe and/or the moisture content thereof and/or the average straw length and/or the length of distribution of the individual pieces of straw and/or the type of harvested material and/or an indication of damp nests and/or the indication of a swathe accumulation and/or the grain yield and/or the moisture content of the grain and/or the speed of the baler (114).

3. Method according to Claim 1 or 2, wherein during the mapping a delay is taken into account between sensing of the property of the harvested material and depositing of the residues of harvested material on the field and/or an offset between a position-determining device (90) and the location of the sensing of the property of the harvested material.

4. Method according to Claim 3, wherein the delay is determined on the basis of a conveying speed of a chopping system (18), a rotational speed of an inclined conveyor (20), a rotor rotational speed of a threshing rotor and/or separating rotor (22, 28) and/or a rotational speed of a drive of a straw walker (32).

5. Method according to one of the preceding claims, wherein the property of the harvested material is determined by means of a sensor (68, 70, 72, 74, 78, 86, 84 and/or 82) and/or on the basis of an operating parameter of the combine harvester (10).

6. Method according to Claim 5, wherein the operator parameter of the combine harvester (10) is the drive power of a conveyor element for harvested material.

7. Method according to Claim 5 or 6, wherein the sensor (68, 70, 72, 74, 78, 86, 84 and/or 82) is an optical sensor (72, 74, 82, 84) which interacts with the harvested material upstream of the combine harvester (10) or in the combine harvester (10) or downstream of the combine harvester (10).

8. Method according to one of the preceding claims, wherein the baler (114) is equipped with at least one sensor for sensing the property of the harvested material and the speed of the baler on the basis of the signals of the means.

9. Method according to one of the preceding claims, wherein the calculation of setpoint speed values is carried out by a control device of the combine harvester (10) or a control unit (198) of the baler (114) or a controller (194) of a working vehicle which tows it or a separate computer.

10. Arrangement for controlling the speed of a baler (114), comprising a controller (194) of a tractor vehicle which tows the baler (114), and/or a control unit (198) of the baler (114) which is configured to control the speed of the baler (114) when the swathe (64) is picked up, taking into account at least one mapped quality of the harvested material during the harvesting from a field by means of the combine harvester (10), during which residues of harvested material are deposited in a swathe (64), and/or data which is derived therefrom.

## Revendications

1. Procédé de contrôle de la vitesse d'une presse à balles (114), comprenant les étapes consistant à :
détecter et cartographier au moins une propriété de la récolte et/ou des données qui en découlent pendant la récolte dans un champ au moyen d'une moissonneuse-batteuse (10), récolte lors de laquelle des résidus de récolte sont déposés dans un andain (64),
et contrôler la vitesse de la presse à balles (114) lors du ramassage de l'andain (64) en tenant compte de la propriété cartographiée de la récolte et/ou des données qui en découlent.

2. Procédé selon la revendication 1, dans lequel la propriété cartographiée de la récolte concerne les dimensions géométriques et/ou la masse des résidus de récolte déposés dans l'andain et/ou leur humidité et/ou la longueur de paille moyenne et/ou la distribution de longueur des pailles individuelles et/ou le type de la récolte et/ou une indication de nids humides et/ou l'indication d'une accumulation d'andains et/ou le rendement en grains et/ou la teneur en humidité des grains et/ou la vitesse de la presse à balles (114).

3. Procédé selon la revendication 1 ou 2, dans lequel, lors de la cartographie, un temps de retard entre une détection de la propriété de la récolte et un dépôt des résidus de récolte sur le champ et/ou un décalage entre un dispositif de détermination de position (90) et le lieu de la détection de la propriété de la récolte est/sont pris en compte.

4. Procédé selon la revendication 3, dans lequel le temps de retard est déterminé sur la base de la vitesse de transport d'un mécanisme de coupe (18), d'une vitesse de rotation d'un transporteur incliné (20), d'une vitesse de rotation d'un rotor de battage et/ou de séparation (22, 28) et/ou d'une vitesse de rotation d'un mécanisme d'entraînement d'un secoueur de paille (32).

5. Procédé selon l'une des revendications précédentes, dans lequel la propriété de la récolte est déterminée au moyen d'un capteur (68, 70, 72, 74, 78, 86, 84 et/ou 82) et/ou sur la base d'un paramètre de fonctionnement de la moissonneuse-batteuse (10).

6. Procédé selon la revendication 5, dans lequel le paramètre de fonctionnement de la moissonneuse-batteuse (10) est la puissance d'entraînement d'un organe de transport de la récolte.

7. Procédé selon la revendication 5 ou 6, dans lequel le capteur (68, 70, 72, 74, 78, 86, 84 et/ou 82) est un capteur optique (72, 74, 82, 84) coopérant avec la récolte en amont de la moissonneuse-batteuse (10) ou dans la moissonneuse-batteuse (10) ou en aval de la moissonneuse-batteuse (10).

8. Procédé selon l'une des revendications précédentes, dans lequel la presse à balles (114) est équipée d'au moins un capteur permettant de détecter la propriété de la récolte et la vitesse de la presse à balles est étalonnée sur la base des signaux provenant desdits moyens.

9. Procédé selon l'une des revendications précédentes, dans lequel le calcul de valeurs de consigne de la vitesse est effectué par un dispositif de commande de la moissonneuse-batteuse (10) ou par une unité de contrôle (198) de la presse à balles (114) ou par une commande (194) d'un véhicule de travail qui tracte celle-ci ou par un ordinateur séparé.

10. Dispositif de contrôle de la vitesse d'une presse à balles (114), comprenant une commande (194) d'un véhicule tracteur qui tracte la presse à balles (114) et/ou une unité de contrôle (198) de la presse à balles (114), qui est conçue pour contrôler la vitesse de la presse à balles (114) lors du ramassage de l'andain (64), en tenant compte d'au moins une propriété de la récolte cartographiée pendant la récolte dans un champ au moyen de la moissonneuse-batteuse (10), récolte lors de laquelle des résidus de récolte sont déposés dans un andain (64), et/ou de données qui en découlent.
